# EUROPÄISCHE PATENTANMELDUNG

(11) **EP 0 858 038 A1**
(43) Veröffentlichungstag der Anmeldung: **12.08.1998**
(21) Anmeldenummer: 98101640.5
(22) Anmeldetag: 30.01.1998
(51) Int. Cl.: G06F 15/16

(54) **Verfahren und Vorrichtung zum Austauschen von Daten zwischen dezentral anordbaren elektronischen Baugruppen**

(30) Priorität: 03.02.1997 DE 19703963
(71) Anmelder: SIEMENS AKTIENGESELLSCHAFT, 80333 München (DE)
(72) Erfinder: Gremse, Christian, Dipl.-Ing., 50829 Köln (DE); Beckers, Paul, Dipl.-Ing., 52399 Merzenich (DE)

(57) **Zusammenfassung**

Um ein Verfahren zum Austauschen von Daten zwischen dezentral anordbaren elektronischen Baugruppen bereitzustellen, welches eine sehr schnelle Kommunikation zum Datenaustausch zwischen einzelnen elektronischen Baugruppen, insbesondere bei digitalen Antriebstechniken, ermöglicht, wird ein Verfahren zum Austauschen von Daten zwischen elektronischen Baugruppen über ein jeweils mittels einer Schnittstelle eine Verbindung zwischen den Baugruppen bereitstellendes Übertragungsmedium bereitgestellt, das dadurch gekennzeichnet ist, daß die Schnittstelle jeder einzelnen Baugruppe wenigstens zwei Speicherbereiche umfassend ausgebildet wird, wobei in Abhängigkeit von Steuersignalen abwechselnd ein Speicherbereich der Baugruppe und ein wenigstens zweiter Speicherbereich dem Übertragungsmedium für Schreib- und/oder Leseoperationen zur Verfügung gestellt wird, und wobei jeder Baugruppe ein charakteristischer Adreßraum im Speicherbereich zugeordnet wird.

## Beschreibung

Die vorliegende Erfindung betrifft ein Verfahren zum Austauschen von Daten zwischen dezentral anordbaren elektronischen Baugruppen über ein jeweils mittels einer Schnittstelle eine Verbindung zwischen den Baugruppen bereitstellendes Übertragungsmedium und eine Vorrichtung zur Durchführung des Verfahrens.

Es sind verschiedene standardisierte Kommunikationssysteme, auch Bussysteme genannt, zum Datenaustausch zwischen zwei oder mehreren elektronischen Baugruppen bzw. Geräten bekannt, beispielsweise Ethernet und sogenannte Feldbussysteme, wie beispielsweise PROFIBUS. Diese Bussysteme sind jeweils für unterschiedliche Anwendungsfelder konzipiert bzw. optimiert und erlauben den Aufbau eines dezentralen Steuerungssystems. Für die Prozeßsteuerung und -überwachung in der automatisierten Fertigung und insbesondere bei digitalen Antriebstechniken sind sehr schnelle und zuverlässige Kommunikationssysteme mit vorhersagbaren Reaktionszeiten erforderlich. Von Nachteil ist bei diesen bekannten Bussystemen deren überaus komplexer Kommunikationsaufbau entsprechend den hierarchisch aufbauenden Ebenen des ISO-Referenzmodells.

Mit parallelen Bussystemen, wie beispielsweise SMP, ISA, PCI oder VME, ist eine sehr schnelle und einfache Kommunikation zwischen verschiedenen Baugruppen aufbaubar. Diese bekannten Bussysteme finden ihren Einsatz dabei insbesondere in Rechnern und PC's.

Die bisher bekannten standardisierten Kommunikationssysteme sind für einen anderen Anwendungsbereich konzipiert und somit für die Prozeßsteuerung und -überwachung in der automatisierten Fertigung und insbesondere bei digitalen Antriebstechniken ungeeignet. Dabei ist es besonders nachteilig, daß zum Aktualisieren aller Daten zwischen den Baugruppen und/oder Geräten diese selber Prozeßzeit für die Kommunikation bereitstellen müssen. Somit ist die Verwendung von an sich bekannten Kommunikationssystemen und Netzwerkarchitekturen, die üblicherweise alle Ebenen des ISO-Referenzmodells vorsehen, ungünstig bzw. ausgeschlossen.

Der Erfindung liegt die Aufgabe zugrunde, ein Verfahren zum Austauschen von Daten zwischen dezentral anordbaren elektronischen Baugruppen bereitzustellen, welches eine sehr schnelle Kommunikation zum Datenaustausch zwischen den einzelnen elektronischen Baugruppen, insbesondere bei digitalen Antriebstechniken, ermöglicht und darüber hinaus einen fehlersicheren und stabilen Betrieb der einzelnen Baugruppen ermöglicht.

Zur technischen Lösung wird ein Verfahren zum Austauschen von Daten zwischen dezentral anordbaren elektronischen Baugruppen über ein jeweils mittels einer Schnittstelle eine Verbindung zwischen den Baugruppen bereitstellendes Übertragungsmedium vorgeschlagen, das dadurch gekennzeichnet ist, daß die Schnittstelle jeder einzelnen Baugruppe wenigstens zwei Speicherbereiche umfassend ausgebildet wird, wobei in Abhängigkeit von Steuersignalen abwechselnd ein Speicherbereich der Baugruppe und ein wenigstens zweiter Speicherbereich dem Übertragungsmedium für Schreib- und/oder Leseoperationen zur Verfügung gestellt wird, und wobei jeder Baugruppe ein charakteristischer Adreßraum im Speicherbereich zugeordnet wird.

Damit wird logisch ein "virtuelles Multiport-RAM" bereitgestellt. Mehrere physikalisch mit dem Übertragungsmedium verbundene Baugruppen können über gemeinsamen virtuellen Speicherbereich, der physikalisch durch die Speicherbereiche der einzelnen Baugruppen gebildet wird, kommunizieren. Damit erfolgt die Kommunikation zwischen den einzelnen Baugruppen durch geeignete Verknüpfung bzw. Kopplung der einzelnen Speicherbereiche, so daß vorteilhafterweise auf komplexe Protokollmechanismen verzichtet werden kann, wie im weiteren noch näher erläutert. Dabei wird das logische virtuelle Multiport-RAM in eine der Anzahl der Baugruppen entsprechende Anzahl von Speicherbereichen aufgeteilt und jeder Baugruppe ein Speicherbereich zugeordnet. Selbstverständlich ist das virtuelle Multiport-RAM dabei erweiterbar, so daß jederzeit weitere Baugruppen angeschlossen werden können.

Die technische Realisierung des virtuellen Multiport-RAM durch wenigstens zwei Speicherbereiche umfassend ausgebildete Schnittstelle jeder einzelnen Baugruppe erlaubt einen überaus schnellen Datenaustausch, da zum einen Speicher und Speicherbereiche sehr schnell ein- und/oder ausgelesen werden können und da zum anderen der Datenaustausch zwischen den einzelnen Baugruppen aufgrund der Möglichkeit, in Abhängigkeit von Steuersignalen abwechselnd einen Speicherbereich der Baugruppe und einen anderen Speicherbereich dem Übertragungsmedium für Schreib- und/oder Leseoperationen zur Verfügung zu stellen, völlig unabhängig von der Baugruppe erfolgen kann. Dadurch, daß jeder Baugruppe ein charakteristischer Adreßraum im Speicherbereich zugeordnet wird, kann auf eine zeitaufwendige, da mit zusätzlichen Adressierungsdaten versehene Adressierung, wie sie bei den bisher bekannten Kommunikationssystemen gebräuchlich ist, verzichtet werden. Dabei wird der Speicherbereich durch die individuelle Adresse der einzelnen Baugruppe festgelegt.

Durch das System der aus zwei Speicherbereichen jeder Baugruppe aufgebauten virtuellen Multiport-RAM's kann der Datenaustausch zwischen den einzelnen Baugruppen mit sehr hoher Geschwindigkeit erfolgen, da insbesondere Wartezeiten bei Zugriff auf die Speicherbereiche seitens der Baugruppe bzw. des Übertragungsmediums vermieden werden. Dies ist insbesondere bei hohen Datenübertragungsraten notwendig, wo diese beispielsweise in den Bereich der Schaltzeiten der Speicher kommen, das heißt mit dem vorliegenden Verfahren wird durch Verwendung der wechselseitig der Baugruppe bzw. dem Übertragungsmedium zuordbaren Speicherbereich auch bei hohen Übertragungsraten ohne Wartezeiten die Datenkonsistenz gewährleistet.

In vorteilhafter Weise wird der Baugruppe für Schreiboperationen nur der charakteristische Adreßraum zugeordnet. Damit kann jede Baugruppe Daten nur in dem ihr zugedachten Adreßraum durch Schreiboperationen und dergleichen verändern. Bei einem Systemfehler und dergleichen können Daten im Adreßraum einer anderen Baugruppe nicht versehentlich überschrieben werden, so daß dadurch weitere Systemfehler in anderen Baugruppen verhindert werden können. Dabei wird ein Zugriff der einzelnen Baugruppen auf alle Adreßräume ermöglicht, der vorteilhafterweise zur Sicherung der Datenkonsistenz für einzelne Baugruppen gesperrt und wieder freigegeben werden kann.

In vorteilhafter Weise wird eine Baugruppe als Takterzeuger verwendet. Dadurch wird sichergestellt, daß die gesamten miteinander verbundenen Baugruppen mit einer einheitlichen Taktrate synchronisiert werden können, um so eine feste zeitliche Reihenfolge des Datenaustausches gewährleisten und vereinbaren zu können, beispielsweise in einem sogenannten Protokoll.

In besonders vorteilhafter Weise werden die Speicherbereiche identisch ausgebildet. Identische Speicherbereiche im Sinne der vorliegenden Erfindung sind Speicherbereiche, die für die Baugruppe und/oder das Übertragungsmedium formal nicht zu unterscheiden sind, das heißt für die Baugruppe und/oder das Übertragungsmedium ist logisch nur ein Speicherbereich, das sogenannte virtuelle Multiport-RAM, vorhanden. Da mehrere Baugruppen miteinander prinzipiell auf die gleiche Art und Weise verbunden werden, ist logisch insgesamt nur ein Speicherbereich vorhanden, während physikalisch für jede Baugruppe zwei Speicherbereiche zur Verfügung stehen. In vorteilhafter Weise werden die Speicherbereiche durch zwei Speicher ausgebildet. Als Speicher werden vorteilhafterweise Dual-Ported-RAM's verwendet. Diese weisen vorteilhafterweise zwei Busanschlüsse auf, so daß auf eine Steuerlogik zum Verbinden der Speicher mit der Baugruppe bzw. dem Übertragungsmedium verzichtet werden kann. Es können aber auch kostengünstigere normale Speicher, zum Beispiel DRAM's, verwendet werden, die dann jedoch mit einer entsprechenden Steuerlogik der Baugruppe bzw. dem Übertragungsmedium wechselseitig zur Verfügung gestellt werden. Als Steuerlogik eignen sich beispielsweise Multiplexer und dergleichen.

Gemäß einem Vorschlag der Erfindung werden die auszutauschenden Daten im Speicherbereich abgelegt. Dadurch werden die einzelnen Baugruppen entlastet, da die Daten sehr schnell in den Speicherbereich geladen werden können und somit der Baugruppe zur weiteren Verarbeitung bzw. Bearbeitung zur Verfügung stehen und schneller von der einen Baugruppe zur anderen übertragen werden können. In vorteilhafter Weise werden die Daten zyklisch aktualisiert. Dazu werden die Daten in vorteilhafter Weise in Datenblöcke zusammengefaßt, wobei jeder Baugruppe ein charakteristischer Datenblock zugeordnet wird. Durch das Zusammenfassen der Daten in Datenblöcke läßt sich in vorteilhafter Weise ein Übertragungsprotokoll erzeugen, das feste Regeln für die zeitliche Reihenfolge des Datenaustausches vereinbart. In vorteilhafter Weise werden dazu die Datenblöcke mit wenigstens einer zusätzlichen Information versehen. In besonders vorteilhafter Weise wird jeder einzelne Datenblock mit wenigstens einer zusätzlichen Information versehen. Dabei können die Informationen zur Synchronisation der Baugruppen und/oder zur Fehlererkennung verwendet werden. Damit wird insgesamt ein Übertragungsprotokoll gebildet, welches einen sicheren und noch schnelleren Datenaustausch und darüber hinaus das Feststellen und Aktualisieren systembedingter Übertragungsfehler ermöglicht.

Um möglichst hohe Datentransferraten erzeugen zu können, wird in vorteilhafter Weise als Übertragungsmedium ein Lichtwellenleiter verwendet. In der optischen Nachrichtentechnik werden als Lichtwellenleiter Glas- oder Kunststoffasern eingesetzt, wobei Kunststoffasern für kurze Reichweiten und niedrige Übertragungsraten und Glasfasern für große Entfernungen und hohe Übertragungsraten geeignet sind. Lichtwellenleiter weisen unter anderem gegenüber Kupferleitungen oder Funkverbindungen wesentlich höhere Übertragungskapazitäten auf und sind verlustärmer, das heißt die Regeneratorabstände zum Regenerieren der zu übertragenden Signale können größer gewählt werden. Darüber hinaus sind Lichtwellenleiter unempfindlich gegenüber elektromagnetischen Feldern, weisen kein Übersprechen und keine nach außen tretende, gegebenenfalls störende Strahlung auf, das heißt die Lichtwellenleiter weisen eine hohe EMV-Festigkeit auf. Desweiteren ist bei Verwendung von Lichtwellenleitern eine galvanische Trennung gegeben, so daß der Datenaustausch potential frei erfolgen kann. Dies kommt insbesondere bei Anwendungen im Bereich der Prozeßtechnik zur Geltung, beispielsweise bei großen Maschinen, bei denen in der Regel immer Ausgleichsströme auftreten. Bei einem metallischen Übertragungsmedium, beispielsweise einer Koaxialleitung oder bei Funkverbindungen und dergleichen, würden diese Ausgleichsströme den Datenaustausch stören. Ein weiterer Vorteil von Lichtwellenleitern gegenüber Koaxialleitungen und dergleichen ist in der einfacheren und unproblematischen Montage gegeben.

Der Bedarf an hoher Übertragungskapazität der verschiedenen Kommunikationssysteme ist nur mit Lichtwellenleitern zu dekken. Die bisher bekannten Verfahren und Vorrichtungen, die die Verwendung von Lichtwellenleitern zum Austauschen von Daten zwischen elektronischen Baugruppen, wie beispielsweise ATM (Asynchronous Transfer Mode), basieren ebenfalls auf dem recht komplexen und aufwendigen ISO-Referenzmodell und weisen eine überaus aufwendige und langsame Ankopplung auf, beispielsweise Seriell-/Parallel-Wandler. Durch die vorliegende Erfindung ist ein sinnvoller Einsatz von Lichtwellenleitern als Übertragungsmedium gegeben, da durch die physikalische Trennung der wenigstens zwei Speicherbereiche der Datenaustausch seitens des Übertragungsmediums vollkommen unabhängig von der Baugruppe bzw. den verschiedenen Baugruppen erfolgen kann. Dadurch vereinfachen sich die Zugriffsmechanismen und Zugriffswartezeiten entfallen, so daß ein überaus schneller Datenaustausch ermöglicht wird.

Dadurch kann die Aktualisierung der Daten mit hoher Geschwindigkeit erfolgen. Die wechselseitig dem Übertragungsmedium bzw. der Baugruppe zugeordneten Speicher lassen keine Wartezeiten beim Zugriff auf die Speicher entstehen, so daß die anfallenden auszutauschenden Daten ohne Verzögerung sofort verarbeitet werden können. Dabei können die Baugruppe und das Übertragungsmedium uneingeschränkt auf den ihnen zugewiesenen Speicherbereich zugreifen. Ein Umschalten der Speicherbereiche erfolgt erst, nachdem die Aktualisierung der Daten abgeschlossen ist. Dadurch wird gewährleistet, daß seitens des Übertragungsmediums die Datenkonsistenz eingehalten wird. Die Umschaltung kann dabei vorteilhafterweise von der Baugruppe gesperrt bzw. freigegeben werden, so daß auch seitens der Baugruppe die Datenkonsistenz eingehalten wird.

In vorteilhafter Weise werden die Daten in jeder Baugruppe neu regeneriert. Dadurch lassen sich insbesondere bei Verwendung von Lichtwellenleitern größere Abstände zwischen den einzelnen Baugruppen erzielen. Desweiteren läßt sich so ein offener Ring der über das Übertragungsmedium miteinander verbundenen Baugruppen feststellen. Dazu kann beispielsweise eine Logik vorhanden sein, die erkennt, ob die Daten einer Baugruppe unverändert geblieben oder verändert worden sind, und dann eine entsprechende Meldung oder ein entsprechendes Signal ausgibt.

Vorrichtungsseitig wird zur Lösung der Aufgabe eine Vorrichtung zum Austauschen von Daten zwischen elektronischen Baugruppen bereitgestellt, die gekennzeichnet ist durch wenigstens einen mit einer Baugruppe über wenigstens einen Bus verbindbaren Speicher, einen mit der Baugruppe über Steuerleitungen und wenigstens einen Bus und mit dem wenigstens einen Speicher über wenigstens einen Bus verbindbaren Controller, wenigstens einen mit dem Controller über wenigstens einen Bus verbindbaren Parallel-Seriell-Wandler, wenigstens einen mit dem Controller über wenigstens einen Bus verbindbaren Seriell-Parallel-Wandler, und jeweils ein über jewcils eine Leitung mit den Wandlern verbindbares Kopplungselement zum Ankoppeln eines Übertragungsmediums.

In einer vorteilhaften Ausgestaltung der Erfindung ist der Speicher über einen Adreß-, einen Daten- und einen Steuerbus mit der Baugruppe verbindbar. In einer weiteren vorteilhaften Ausgestaltung der Erfindung ist der Controller über einen Steuerbus, eine Interrupt- und/oder eine Sperr-Leitung mit der Baugruppe verbindbar. Mit einem weiteren Vorschlag der Erfindung ist der Controller mit dem Speicher über einen Adreß-, einen Daten- und einen Steuerbus verbindbar. Gemäß einem weiteren Vorschlag der Erfindung sind der Parallel-Seriell- und der Seriell-Parallel-Wandler jeweils über einen Daten- und Steuerbus mit dem Controller verbindbar.

Damit ist eine aus wenigen und handelsüblichen Einzelteilen fertigbare Vorrichtung gegeben, die eine sehr einfache und leicht überschaubare Architektur aufweist und zum Austauschen von Daten zwischen verschiedenen elektronischen Baugruppen, insbesondere bei digitalen Antriebstechniken in Automatisierungssystemen, eingesetzt werden kann.

Weitere Vorteile und Merkmale der Erfindung ergeben sich aus der folgenden Beschreibung anhand der Figur. Dabei zeigt:

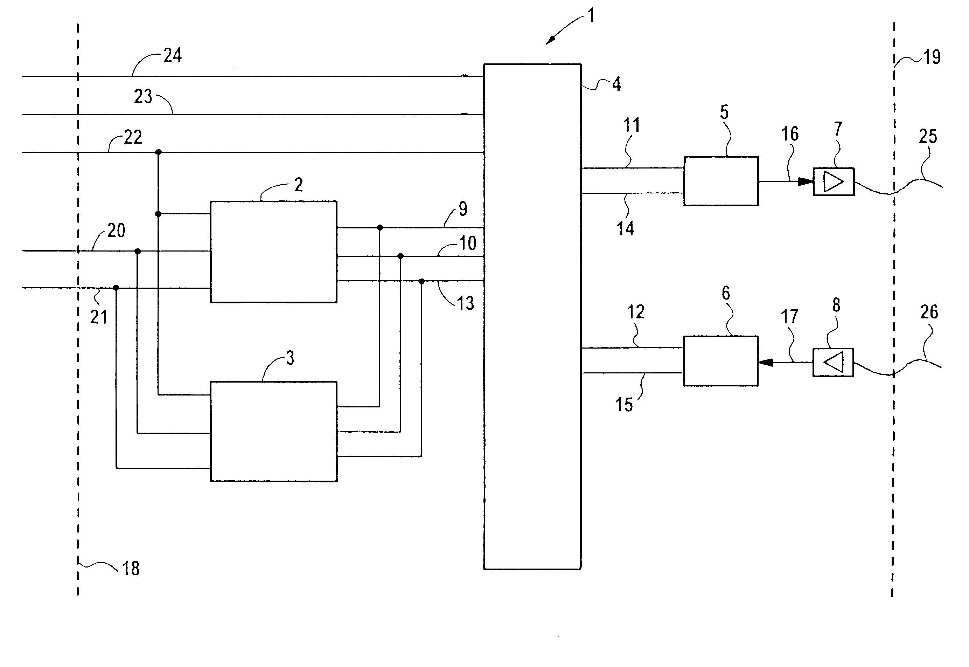

- FIG 1: ein Ausführungsbeispiel einer Vorrichtung zur Durchführung des erfindungsgemäßen Verfahrens.

FIG 1 zeigt einen Buskoppler 1, bestehend aus zwei parallel geschalteten Speichern 2 und 3, einem Controller 4, einem Parallel-Seriell-Wandler 5, einem Seriell-Parallel-Wandler 6 und zwei Kopplungselementen 7 und 8, die hier als Leuchtdiode bzw. Fotodiode ausgebildet sind. Die Speicher 2 und 3, der Parallel-Seriell-Wandler 5 und der Seriell-Parallel-Wandler 6 sind mit dem Controller 4 über einen Adreßbus 9, einen Datenbus 10, 11 und 12 und einen Steuerbus 13, 14 und 15 verbunden. Der Ausgang des Parallel-Seriell-Wandlers 5 und der Eingang des Seriell-Parallel-Wandlers 6 sind jeweils über eine Leitung 16 bzw. 17 mit den Kopplungselementen 7 bzw. 8 verbunden.

Der in FIG 1 dargestellte Buskoppler 1 kann im Bereich der gestrichelt eingezeichneten Linie 18 an eine hier nicht dargestellte elektronische Baugruppe angeschlossen werden. Dazu weist der Buskoppler 1 einen mit den Speichern 2 und 3 verbundenen Adreßbus 20 und Datenbus 21 auf. Desweiteren weist der Buskoppler 1 einen mit dem Controller 4 und den Speichern 2 und 3 verbundenen Steuerbus 22 sowie zwei mit dem Controller 4 verbundene Steuerleitungen 23 und 24 auf. Die Steuerleitungen 23 und 24 können dabei eine Interrupt- bzw. Lock- oder Sperr-Funktion haben, auf die im weiteren noch näher eingegangen wird.

Wie in FIG 1 mit der gestrichelt eingezeichneten Linie 19 angedeutet ist der Buskoppler 1 über die Kopplungselemente 7 und 8 an einen Lichtwellenleiter 25 bzw. 26 angeschlossen, der ein eine Verbindung zwischen mehreren elektronischen Baugruppen bereitstellendes Übertragungsmedium bildet.

Mit dem Buskoppler 1 kann über einen aus einem Lichtwellenleiter gebildeten Ring ein schneller Datenaustausch zwischen mehreren elektronischen Baugruppen bereitgestellt werden. Dazu wird ein sogenanntes Übertragungsprotokoll vereinbart, das beispielsweise wie folgt aufgebaut sein kann:

Für jede elektronische Baugruppe wird ein Datenblock von fest vorgegebener Größe bereitgestellt. Jeder Datenblock ist einer elektronischen Baugruppe über eine der elektronischen Baugruppe zugeordneten individuellen Adresse eindeutig zugeordnet. Jeder Datenblock wird mit einer zusätzlichen Information versehen. Dazu eignet sich beispielsweise ein jedem Datenblock vorgestelltes Startzeichen, das den Beginn eines neuen Datenblocks kennzeichnet, und ein jedem Datenblock nachgeschaltetes Fehlerinformationszeichen, das zum Erkennen einer fehlerhaften Übertragung geeignet ist. Zusätzlich können die gesamten Datenblöcke mit einer weiteren zusätzlichen Information, beispielsweise ein weiteres Startzeichen zur Kennzeichnung einer neuen Datenblockfolge, versehen sein. Durch die Startzeichen ist folglich eine Synchronisierung zwischen den verschiedenen Baugruppen möglich. Zur Synchronisierung wird eine elektronische Baugruppe als Takterzeuger geschaltet, der das Datensynchronisationszeichen, das heißt das Startzeichen einer neuen Datenblockfolge, vorgibt, um so den Start einer neuen Datenblockfolge zu markieren.

Nach dem Einschalten und Initialisieren des gesamten Systems wird ein Speicher 2 oder 3 der elektronischen Baugruppe und der andere Speicher 2 oder 3 dem Buskoppler 1 zugeordnet. Als Speicher 2 und 3 werden hier zwei Dual-Ported-RAM's verwendet. Die Daten der als Takterzeuger geschalteten elektronischen Baugruppe werden aus dem der elektronischen Baugruppe zugeordneten Speicher 2 oder 3 über den Datenbus 10 vom Controller 4 ausgelesen, über den Datenbus 11 dem Parallel-Seriell-Wandler 5 zugeführt und über die Leitung 16 mit Hilfe des Kopplungselementes 7 über den Lichtwellenleiter 25 gesendet.

Die Speicher 2 und 3 bilden dabei jeweils eine Speicherseite, die in Abhängigkeit von Steuersignalen abwechselnd der elektronischen Baugruppe oder dem Buskoppler 1 zur Verfügung gestellt wird. Als alternative Realisierung besteht die Möglichkeit, einen einzigen Speicher zu verwenden, der mit Hilfe einer entsprechenden Steuerlogik einen entsprechenden Seitenwechsel, beispielsweise durch Adressenverschiebung im Adreßraum des Speichers ermöglicht.

Nach Empfang eines kompletten Datenblockes wechselt der Buskoppler 1 die Speicherseiten, das heißt die Speicher 2 oder 3, so daß der elektronischen Baugruppe die aktuellen Daten bereitgestellt werden. Der Seiten- oder Speicherwechsel wird der elektronischen Baugruppe mittels des Controllers 4 durch einen Interrupt, beispielsweise über die Steuerleitung 23, mitgeteilt. Über die Steuerleitung 24 kann ein entsprechender Seiten- oder Speicherwechsel seitens der elektronischen Baugruppe durch ein Sperr- oder Lock-Signal verhindert werden, beispielsweise wenn die Baugruppe gerade Daten aus dem Speicher 2 oder 3 liest oder ein systembedingter Übertragungsfehler festgestellt wird. Damit erfolgt der Datenaustausch seitens des Buskopplers 1 völlig unabhängig von der Baugruppe.

Jeder elektronischen Baugruppe wird von dem Buskopplermodul 1 eine charakteristische Geräteadresse zugewiesen. Bei der Vergabe der Adressen muß dabei keine Reihenfolge eingehalten werden und auch durch Vergabe einer doppelten Geräteadresse ist eine Funktion des gesamten Systems gegeben, wenn auch die Daten der entsprechenden elektronischen Baugruppen mit gleicher Geräteadresse gegenseitig überschrieben werden.

Der Controller 4 dient zur Abwicklung der Kommunikation. Dabei realisiert dieser das oben beschriebene Protokoll und erzeugt alle Steuersignale für die Speicher 2 und 3, die elektronische Baugruppe und die Parallel-Seriell- bzw. Seriell-Parallel-Wandler 5 und 6, die zum Senden bzw. Empfangen der Daten notwendig sind.

Da jeder elektronischen Baugruppe im Protokoll ein für sie charakteristischer Adreßraum im Speicher zugeordnet wird und die elektronische Baugruppe nur in diesem ihr zugeordneten Adreßraum Daten schreiben kann, wird bei einem Systemfehler in einer elektronischen Baugruppe die Funktionsweise der anderen miteinander verbundenen elektronischen Baugruppen nicht gestört.

Die Parallel-Seriell- und Seriell-Parallel-Wandler 5 und 6 wandeln die vom Controller 4 parallel gesendeten Daten in serielle Signale um bzw. die über die Lichtwellenleiter seriell gesendeten Signale in parallele, dem Controller 4 zugeführte Daten um. Dabei werden die Daten beispielsweise auf der Leitung 16 und 17 codiert. Durch die Codierung kann gewährleistet werden, daß die Kopplungselemente 7 und 8 synchronisiert bleiben. Zusätzlich können die Wandler 7 und 8 Synchronisationszeichen erzeugen, die für den Fall, daß keine Daten gesendet werden, eine Synchronisation der Kopplungselemente gewährleistet.

Damit wird mit dem Buskoppler 1 ein Verfahren zum Austauschen von Daten zwischen elektronischen Baugruppen bereitgestellt, mit dem eine sehr schnelle Kommunikation zum Datenaustausch zwischen den einzelnen elektronischen Baugruppen ermöglicht wird, wobei zusätzlich durch eine geeignete Ausbildung eines Übertragungsprotokolls eine übersichtliche Architektur und Verbindung der verschiedenen im Buskoppler zu verwendenden Bauelemente die Speicher, Controller, Wandler und dergleichen ein fehlersicherer und stabiler Betrieb ermöglicht wird.

## Patentansprüche

1. Verfahren zum Austauschen von Daten zwischen dezentral anordbaren elektronischen Baugruppen über ein jeweils mittels einer Schnittstelle eine Verbindung zwischen den Baugruppen bereitstellendes Übertragungsmedium, **dadurch gekennzeichnet** , daß die Schnittstelle jeder einzelnen Baugruppe wenigstens zwei Speicherbereiche umfassend ausgebildet wird, wobei in Abhängigkeit von Steuersignalen abwechselnd ein Speicherbereich der Baugruppe und ein wenigstens zweiter Speicherbereich dem Übertragungsmedium für Schreib- und/oder Leseoperationen zur Verfügung gestellt wird, und wobei jeder Baugruppe ein charakteristischer Adreßraum im Speicherbereich zugeordnet wird.

2. Verfahren nach Anspruch 1, **dadurch gekennzeichnet** , daß der Baugruppe für Schreiboperationen nur der charakteristische Adreßraum zugeordnet wird.

3. Verfahren nach Anspruch 1 oder 2, **dadurch gekennzeichnet** , daß eine Baugruppe als Takterzeuger verwendet wird.

4. Verfahren nach einem der vorhergehenden Ansprüche, **dadurch gekennzeichnet** , daß die Speicherbereiche identisch ausgebildet werden.

5. Verfahren nach einem der vorhergehenden Ansprüche, **dadurch gekennzeichnet** , daß die Speicherbereiche durch zwei Speicher ausgebildet werden.

6. Verfahren nach Anspruch 5, **dadurch gekennzeichnet** , daß als Speicher Dual-Ported-RAM's verwendet werden.

7. Verfahren nach einem der vorhergehenden Ansprüche, **dadurch gekennzeichnet** , daß die Daten im Speicherbereich abgelegt werden.

8. Verfahren nach einem der vorhergehenden Ansprüche, **dadurch gekennzeichnet** , daß die Daten zyklisch aktualisiert werden.

9. Verfahren nach einem der vorhergehenden Ansprüche, **dadurch gekennzeichnet** , daß die Daten in Datenblöcke zusammengefaßt werden.

10. Verfahren nach einem der vorhergehenden Ansprüche, **dadurch gekennzeichnet** , daß jeder Baugruppe ein charakteristischer Datenblock zugeordnet wird.

11. Verfahren nach einem der vorhergehenden Ansprüche, **dadurch gekennzeichnet** , daß die Datenblöcke mit wenigstens einer zusätzlichen Information versehen werden.

12. Verfahren nach einem der vorhergehenden Ansprüche, **dadurch gekennzeichnet** , daß jeder Datenblock mit wenigstens einer zusätzlichen Information versehen wird.

13. Verfahren nach Anspruch 11 oder 12, **dadurch gekennzeichnet** , daß die Information zur Synchronisation der Baugruppen verwendet wird.

14. Verfahren nach Anspruch 11 oder 12, **dadurch gekennzeichnet** , daß die Information zur Fehlererkennung verwendet wird.

15. Verfahren nach einem der vorhergehenden Ansprüche, **dadurch gekennzeichnet** , daß als Übertragungsmedium ein Lichtwellenleiter verwendet wird.

16. Vorrichtung zur Durchführung des Verfahrens nach einem der Ansprüche 1 bis 15, **gekennzeichnet** durch wenigstens einen mit einer Baugruppe über wenigstens einen Bus (20,21) verbindbaren Speicher (2,3), einen mit der Baugruppe über Steuerleitungen (23,24) und wenigstens einem Bus (22) und mit dem wenigstens einen Speicher (2,3) über wenigstens einen Bus (9,10,13) verbindbaren Controller (4), wenigstens einen mit dem Controller (4) über wenigstens einen Bus (11,14) verbindbaren Parallel-Seriell-Wandler (5), wenigstens einen mit dem Controller (4) über wenigstens einen Bus (12,15) verbindbaren Seriell-Parallel-Wandler (6) und jeweils ein über jeweils eine Leitung (16,17) mit den Wandlern (5,6) verbindbares Kopplungselement (7,8) zum Ankoppeln eines übertragungsmediums (25,26).

17. Vorrichtung nach Anspruch 16, **dadurch gekennzeichnet** , daß der Speicher (2,3) über einen Adreß- (20), einen Daten- (21) und einen Steuerbus (22) mit der Baugruppe verbindbar ist.

18. Vorrichtung nach Anspruch 16, **dadurch gekennzeichnet** , daß der Controller (4) über einen Steuerbus (22), eine Interrupt- (23) und/oder eine Sperr-Leitung (24) mit der Baugruppe verbindbar ist.

19. Vorrichtung nach Anspruch 16, **dadurch gekennzeichnet** , daß der Controller (4) mit dem Speicher (2,3) über einen Adreß- (9), einen Daten- (10) und einen Steuerbus (13) verbindbar ist.

20. Vorrichtung nach Anspruch 16, **dadurch gekennzeichnet** , daß der Parallel-Seriell-Wandler (5) über einen Daten- (11) und einen Steuerbus (14) mit dem Controller (4) verbindbar ist.

21. Vorrichtung nach Anspruch 16, **dadurch gekennzeichnet** , daß der Seriell-Parallel-Wandler (6) über einen Daten- (12) und einen Steuerbus (15) mit dem Controller (4) verbindbar ist.
